# FASCICULE DE BREVET EUROPEEN

(11) **EP 2 104 622 B1**
(45) Date de publication et mention de la délivrance du brevet: **11.07.2012**
(21) Numéro de dépôt: 07857581.8
(22) Date de dépôt: 14.12.2007
(51) Int. Cl.: B60R 25/02

(54) **ANTIVOL DE SECURITE POUR VEHICULE COMPRENANT UN COULISSEAU A LANGUETTE ELASTIQUE**
DIEBSTAHLSICHERUNGSVORRICHTUNG FÜR EIN FAHRZEUG MIT EINEM EINE ELASTISCHE NASE AUFWEISENDEN SCHIEBER
SECURITY ANTITHEFT DEVICE FOR A VEHICLE INCLUDING A SLIDER WITH AN ELASTIC TAB

(30) Priorité: 19.12.2006 FR 0611104
(43) Date de publication de la demande: 30.09.2009
(73) Titulaire: Valeo Sécurité Habitacle, 94046 Créteil Cedex (FR)
(72) Inventeur: CANARD, Louis, 94042 Creteil (FR)
(74) Mandataire: Larger, Solène
(86) Numéro de dépôt international: PCT/EP2007/063935
(87) Numéro de publication internationale: WO 2008/074731

(56) Documents cités:
- EP-A1- 0 210 962
- EP-A1- 1 084 915
- DE-A1- 4 219 846
- FR-A- 2 131 688
- GB-A- 1 326 190

## Description

La présente invention concerne un antivol de sécurité pour véhicule comprenant un coulisseau à languette élastique.

Elle concerne plus particulièrement un antivol de véhicule faisant intervenir un dispositif de verrouillage de la colonne de direction d'un véhicule lors du retrait de la clé de contact.

Elle concerne plus particulièrement, mais non exclusivement, un antivol de direction de véhicule automobile comportant un boîtier dans lequel un rotor est monté en rotation entre une position angulaire de repos (position appelée également position stop) dans laquelle une clé adaptée peut être introduite, d'avant en arrière, ou retirée axialement d'arrière en avant, et au moins une position angulaire d'utilisation, dans laquelle la clé ne peut être extraite du rotor, le rotor comportant un organe de sortie rotatif formant came qui est susceptible de coopérer avec un doigt de commande porté par un coulisseau pour commander les déplacements de ce dernier. Le coulisseau est monté coulissant dans le boîtier selon une direction axiale, entre une position arrière d'antivol vers laquelle il est sollicité élastiquement et dans laquelle il fait saillie axialement vers l'arrière à travers une ouverture du boîtier pour bloquer en rotation un organe de la colonne de direction lorsque le rotor est en position de repos, clé extraite, et une position avant escamotée à l'intérieur du boîtier.

De nombreux perfectionnements ont été apportés aux antivols de ce type.

Il existe des rotors faisant intervenir un coulisseau de commande d'actionnement d'un pêne montée axialement coulissant, dont une extrémité porte un doigt basculant et dont l'autre extrémité est conformée de manière à coopérer avec un doigt de blocage mobile radialement au niveau de l'entrée du rotor. Ce doigt de blocage qui est situé à l'opposé du doigt basculant est conçu de manière à être déplacé par la clé lors de son introduction dans le rotor de manière à passer dans une position dans laquelle il coopère avec le coulisseau pour la bloquer axialement.

Les brevets FR 2 788 477 et EP 1 084 915 et la demande de brevet EP 0210 962 A1 présentent des dispositifs permettant de retenir le coulisseau tant que la clé n'est pas complètement retirée.

Selon l'art antérieur, les dispositifs existants nécessitent un grand nombre de pièces, ce qui rend leur montage difficile et donc onéreux.

Afin de remédier à cet inconvénient, l'invention propose un antivol de direction de véhicule automobile comportant un boîtier dans lequel un rotor est monté à rotation entre une position angulaire de repos dans laquelle une clé appropriée peut être introduite, par un orifice d'avant en arrière, ou retirée axialement d'arrière en avant, et au moins une position angulaire d'utilisation, dans laquelle la clé ne peut être extraite du rotor, le rotor comportant à l'opposé de l'orifice d'entrée un organe de sortie rotatif formant came comprenant une face interne sensiblement située dans un plan perpendiculaire à l'axe de rotation du rotor, la dite came étant susceptible de coopérer avec un doigt de commande porté par un coulisseau monté coulissant dans le boîtier, selon une direction axiale, entre une position arrière d'antivol vers laquelle il est sollicité par des moyens élastiques et dans laquelle il fait saillie axialement vers l'arrière à travers une ouverture du boîtier pour commander le blocage en rotation d'un organe de la colonne de direction lorsque le rotor est en position de repos, clé extraite, et une position avant escamotée à l'intérieur du boîtier comprenant en outre :
- un palpeur situé au voisinage de l'entrée du rotor pourra être sollicité par la clé lors dés son introduction dans le dit rotor,
- un coulisseau pourra comprendre
- un corps de forme longiligne,
- un moyen élastique tendant à pousser le coulisseau équipé vers l'arrière du verrou,
- un doigt de commande solidaire avec le corps du coulisseau et coopérant avec la came,
- une lame dont l'extrémité arrière est rendue solidaire au moins en translation au corps du coulisseau, afin que l'extrémité avant de cette lame, coopérant avec le palpeur puisse se mouvoir radialement,
- un moyen élastique tendant à rapprocher l'extrémité avant de la lame radialement vers le centre du rotor.

Dans des modes de réalisation non limitatifs, l'invention présente des caractéristiques supplémentaires suivantes prises isolément ou en combinaison :
- la lame pourra être articulée autour d'une charnière solidaire du corps, cette charnière ayant pour axe de rotation un axe situé sur le corps et perpendiculaire à l'axe de rotation du rotor,
- le moyen élastique tendant à rapprocher l'extrémité avant de la lame radialement vers le centre du rotor pourra être un ressort de compression placé entre le corps et la lame.
- la lame pourra être une lame élastique fixée en sa partie arrière au corps
- la lame élastique pourra avoir une forme telle au repos qu'elle a naturellement tendance à se placer vers l'intérieur du rotor, de telle sorte que lorsque le rotor est en position stop et que la clé est retirée, le coulisseau soit libre d'être poussé par le moyen élastique vers l'arrière du verrou afin de bloquer la direction, et que lorsque la clé est insérée dans le verrou, le palpeur basculant étant en position sortie, le coulisseau étant entraînée par la pente de la came vers l'avant du verrou, le crochet de la lame élastique du coulisseau vienne contourner le palpeur basculant pour venir se crocheter afin que le coulisseau et donc le pêne soit maintenu en position de sécurité.
- la lame pourra comprendre en sa partie arrière un pliage constituant une butée de reprise d'effort, cette partie traversant un premier orifice central du coulisseau,
- la lame pourra comprendre en sa partie avant un pliage constituant une butée d'armement limitant le débattement radial de la lame flexible,
- la lame pourra comprendre en sa partie avant un pliage constituant un organe de guidage latéral dans la mesure où ce pliage peut coulisser latéralement dans une encoche du coulisseau prévu à cet effet,
- le palpeur pourra être articulé suivant un axe perpendiculaire à l'axe du rotor
- le doigt de commande pourra être monté tournant autour d'un axe radial afin de diminuer les frottements entre le doigt de commande et la came.
- la came pourra être réalisée en matériaux plastiques éventuellement chargés en fibres à haute résistance notamment dans le cas où le doigt de commande est monté tournant autour d'un axe radial
- la came pourra être réalisée en alliage de Zinc et d'Aluminium.
- le palpeur pourra être réalisée en alliage de Zinc et d'Aluminium ou en matériaux plastiques.
- la lame élastique pourra être réalisée en acier à ressort ou en cuivre béryllium traité thermiquement
- la lame élastique et le corps du coulisseau pourront être réalisés à partir de la même pièce par découpage et emboutissage.

Un mode de réalisation de l'invention sera décrit ci-après à titre d'exemple non limitatif, en faisant référence aux dessins annexés dans lesquels :
La figure 1 montre schématiquement une coupe d'un verrou selon l'invention, la clé étant insérée dans le rotor, le rotor étant en position stop, le coulisseau étant en position rentrée.
La figure 2 montre schématiquement une coupe d'un verrou selon l'invention, la clé étant retirée du rotor, le rotor étant en position stop, le coulisseau étant en position sortie.
La figure 3 montre schématiquement une coupe d'un verrou selon l'invention, la clé étant insérée dans le rotor, le rotor étant entraîné par la clé en rotation, et le coulisseau étant entraîné en translation axiale vers l'avant du verrou, par l'intermédiaire de la pente de la came agissant sur le doigt de commande du coulisseau,
La figure 4A montre schématiquement le coulisseau comprenant une lame articulée, un ressort de compression tendant à entraîner le coulisseau vers l'arrière du verrou et un ressort de compression entre la lame et le corps tendant à entraîner l'extrémité avant de la lame radialement vers l'intérieur du rotor.
La figure 4B montre schématiquement en vue éclatée le coulisseau composé d'un corps et d'une lame élastique.
La figure 5 montre schématiquement une vue en perspective d'une came.

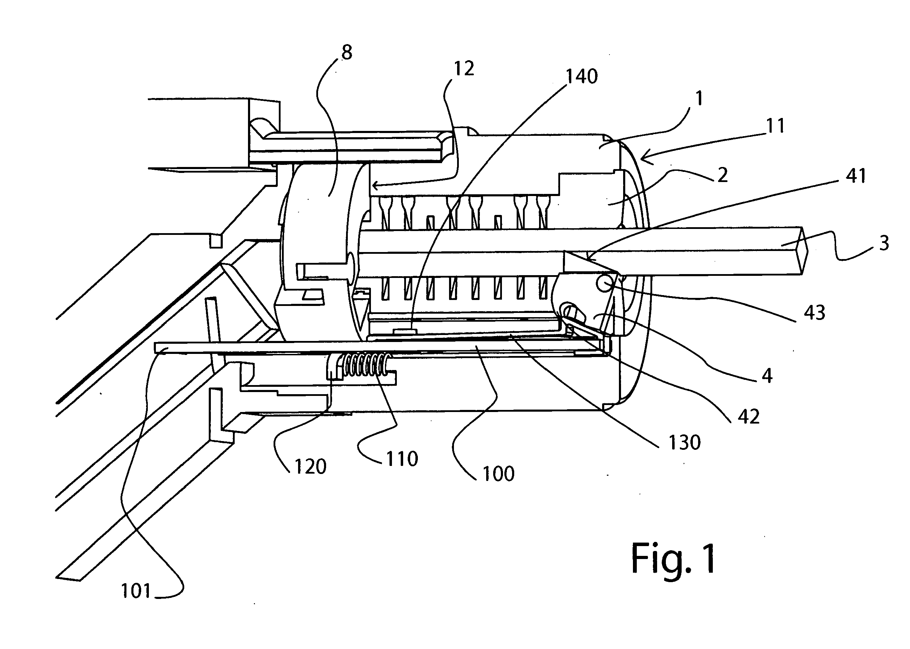

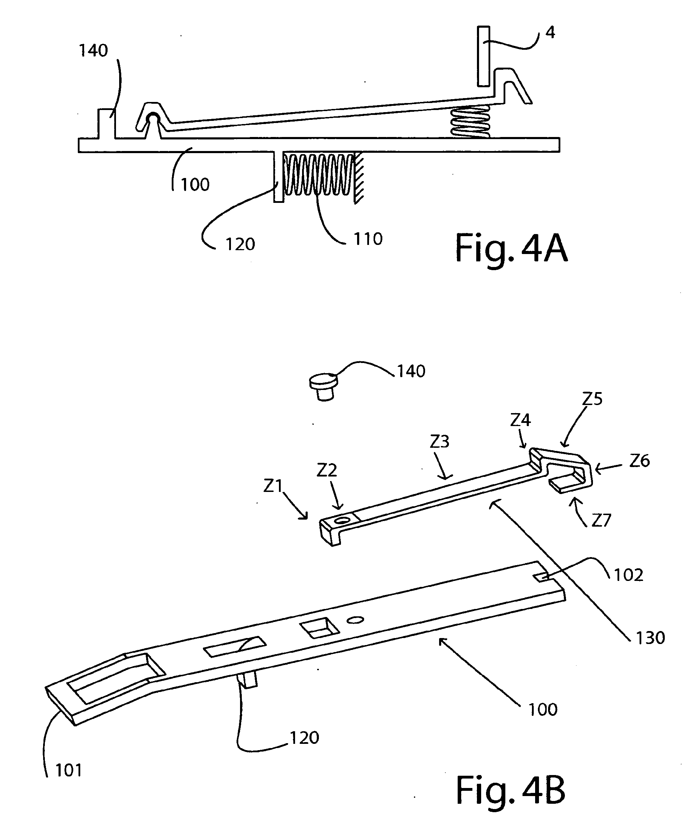

Dans l'exemple de réalisation non limitatif illustré dans les figures 1 à 5, le dispositif comprend principalement un boîtier 1, un rotor 2, une clé 3, un palpeur basculant 4, un ressort 110, un coulisseau 100 équipé d'une lame élastique 130, d'un doigt de commande 140 et une came 8 solidaire du rotor 2.

La figure 1 représente une coupe de la partie avant du verrou. La clé 3 est insérée dans le rotor 2. La came 8 est solidarisée en bout du rotor. Le palpeur basculant 4 peut tourner autour d'un axe 43 perpendiculaires à l'axe du rotor. Dans la configuration décrite par la figure, la clé pousse sur le doigt basculant 4 et crochète la lame flexible 130 qui est solidarisée longitudinalement avec le corps 100 du coulisseau.

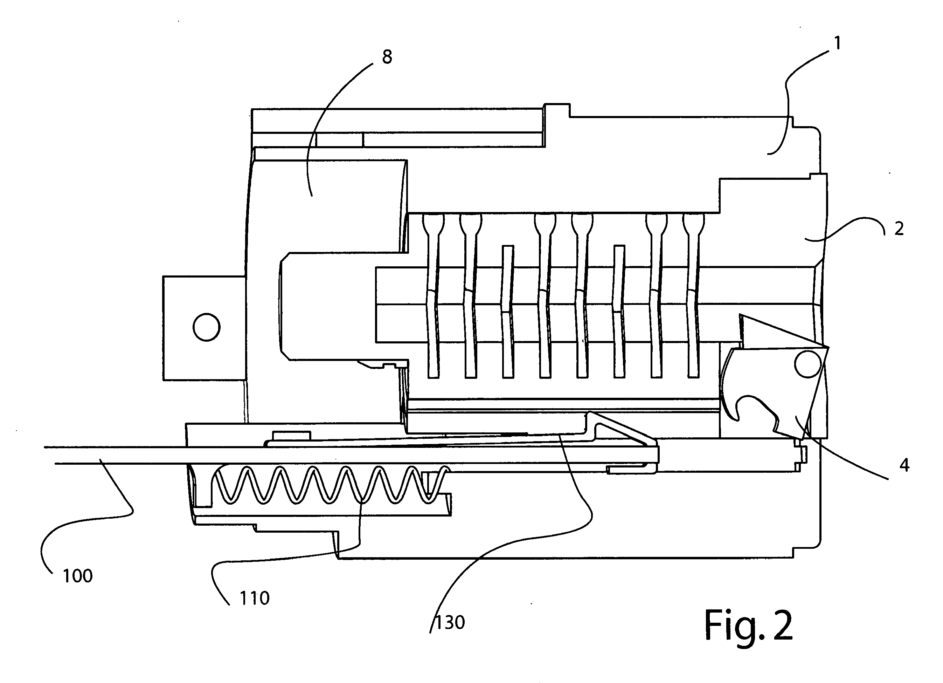

Dans la figure 2 la clé 3 a été enlevée et le coulisseau 100 est en position sortie. La lame flexible 130 a été libérée.

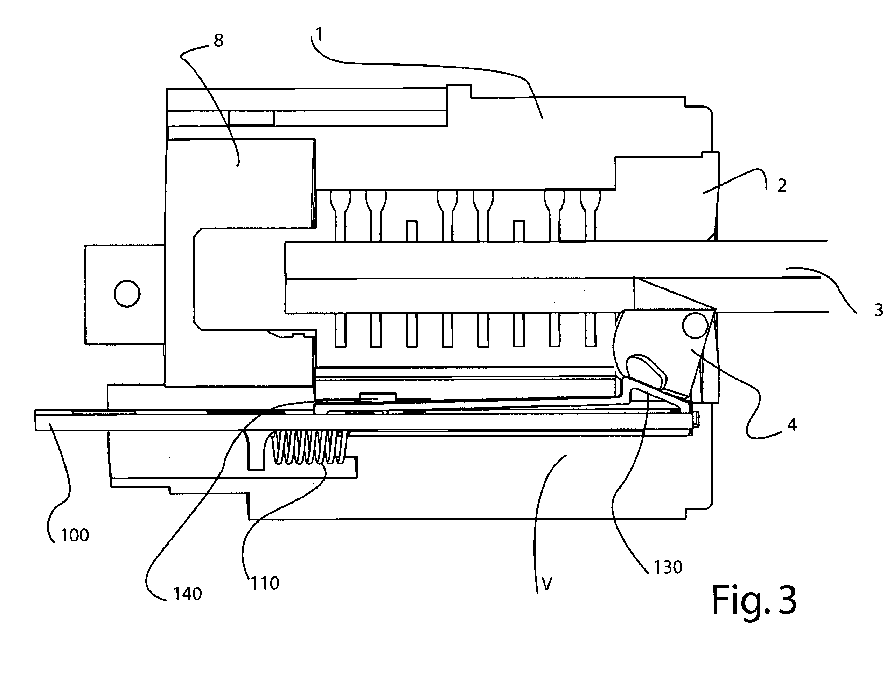

La figure 3 représente le verrou alors que la clé 3 a été insérée dans le rotor 2. Par rotation de la clé et donc du rotor le doigt 140 est forcé de suivre la rampe de la came et force le coulisseau 100 à se diriger suivant la flèche V. La lame flexible 130 est poussée par le doigt basculant 4 qui glisse sur la partie en pente douce du crochet placé en extrémité de la lame flexible, pour revenir en fin de course à la position totalement rentrée de la figure 1.

Le boîtier 1 comprend une face avant 11 d'introduction de la clé, et une face arrière 12. Ce boîtier comprend un orifice sensiblement circulaire pour loger le rotor et la came. Il comprend en outre un logement axial formant glissière.

Le rotor 2 est monté tournant dans le boîtier. Il comprend une ouverture du coté de la face avant du boîtier permettant l'introduction de la clé.

La clé 3 peut être introduite dans le rotor par la face avant du boîtier.

Le palpeur basculant 4 comprend une partie supérieure 41 coopérant avec la partie inférieure de la clé 3, une partie inférieure 42 en forme de crochet, et un axe de rotation 43 perpendiculaire à l'axe du rotor.

Le ressort 110 travaille en compression. Il s'appuie à une de ses extrémités sur la surface d'appui du boîtier et sur l'autre sur une surface d'appui du coulisseau.

Le coulisseau 100 comprend à une extrémité une partie 101 permettant de le relier mécaniquement à un pêne de verrouillage de la colonne de direction d'un véhicule. Il comprend également sur sa partie inférieure une surface d'appui 120 permettant l'appui du ressort 110. Cette surface d'appui est obtenue par emboutissage du corps du coulisseau. Le coulisseau coulisse dans le logement axial du boîtier prévu à cet effet. Le doigt de commande 140 coopère avec la came 8. Ici ce doigt de commande est monté tournant sur un axe épaulé traversé par un rivet permettant la solidarisation de l'ensemble. Une encoche 102 permet de guider l'extrémité avant de la lame élastique latéralement lors de son mouvement radial.

La lame élastique métallique 130 est ici formée par emboutissage puis traitée thermiquement pour optimiser ses caractéristiques mécaniques. Elle peut être en acier à ressorts ou en bronze béryllium par exemple. Cette lame élastique comprend six zones distinctes Z1 à Z7 assurant chacune une fonction particulière. La zone Z1 située la plus en arrière comprend un retour à 90 degrés rentrant dans un orifice du corps de coulisseau prévu à cet effet. La zone Z2 comprend un orifice traversant circulaire permettant le passage d'un rivet permettant à la fois la fixation de la lamelle flexible sur le corps du coulisseau et la fixation du doigt de commande 140. La zone Z3 est une surface plane flexible. La zone Z4 est une surface sensiblement perpendiculaire au corps du coulisseau. Cette surface coopère avec le crochet 42 du palpeur basculant 4 pour retenir le coulisseau en position rentrée lorsque la clé est introduite dans le rotor et que le rotor est en position stop. La zone Z5 présente une surface ayant une pente douce pour que lorsque le coulisseau passe de la position sortie à la position rentrée, la lame élastique soit contrainte de se rapprocher du corps du coulisseau pour venir s'encliqueter dans la forme en crochet du palpeur basculant 4. La zone Z6 est sensiblement perpendiculaire au corps du coulisseau. La lame élastique dans cette zone Z6 est guidée par l'encoche 102 du corps 100 du coulisseau. La zone Z7 est un redan de la lame élastique qui permet de maintenir la lame élastique dans une position de repos de la lame élastique et qui correspond à une position de la lame élastique la plus éloignée du corps du coulisseau.

La came 8 présente un corps 81 de forme générale cylindrique coaxiale au rotor, comportant une cavité débouchant au niveau de la face cylindrique par un orifice délimité successivement, à partir d'une première face axiale F1 du corps, par une face axiale F2, une face radiale F3 s'étendant à une faible distance de la deuxième face radiale du corps, et une face incurvée F4, sensiblement hélicoïdale qui se termine au niveau de la première face radiale du corps. Le fond de la cavité 120 présente du coté de la première face radiale du corps une portion cylindrique adjacente à la face incurvée suivie d'une concavité ou dégagement de forme sensiblement parallélépipédique. Il présente en outre une forme en cuvette C constituant une sorte de rampe permettant le guidage du doigt basculant de la concavité à la face radiale cylindrique en suivant un trajet comportant un tronçon radial amenant le doigt contre la face incurvée, puis un tronçon incurvé le long de la face incurvée, pour parvenir enfin sur la portion cylindrique, avant de retrouver au droit de la concavité la première face radiale avant de revenir en regard de la concavité.

Le fonctionnement d'un tel dispositif est le suivant :

En position de repos avant utilisation la clé est retirée du rotor (fig.2). Le ressort pousse sur le coulisseau.

En introduisant la clé dans le rotor, on pousse sur la surface supérieure du palpeur basculant. Ceci conduit à faire tourner le palpeur basculant autour de son point de rotation et par voie de conséquence descendre la partie arrière du palpeur basculant qui est en forme de crochet

En tournant la clé, le doigt de commande suit la came (surface F4). Le coulisseau se déplace alors vers l'avant du rotor jusqu'à ce que le doigt de commande arrive sur la face interne de la came (surface F1). Le coulisseau est alors dans la position rentrée.

En revenant vers la position stop, le doigt de commande suit la face interne (surface F1) de la came qui est une surface plane perpendiculaire à l'axe XX'. Durant ce déplacement le doigt de commande et le coulisseau ne bougent pas. Le coulisseau reste en position rentrée. En arrivant prés de la position stop le doigt de commande ne s'appuie plus sur la face avant de la came mais dans ce cas le coulisseau est retenu par la lame élastique dont la surface Z4 est retenue par le crochet 42 du palpeur basculant qui empêche le doigt de commande de rentrer dans la rainure axiale (C) de la came.

Lorsque on retire la clé, le ressort 110 pousse le coulisseau qui tend à faire se relever le crochet du palpeur basculant compte tenu des pentes respectives du crochet du palpeur basculant et de la zone Z4 de la lame élastique. Le coulisseau peut alors se déplacer vers l'arrière. Le doigt de commande pénètre librement dans la rainure C de la came. Le coulisseau est alors en position sortie en entraînant le pêne de blocage de la direction du véhicule.

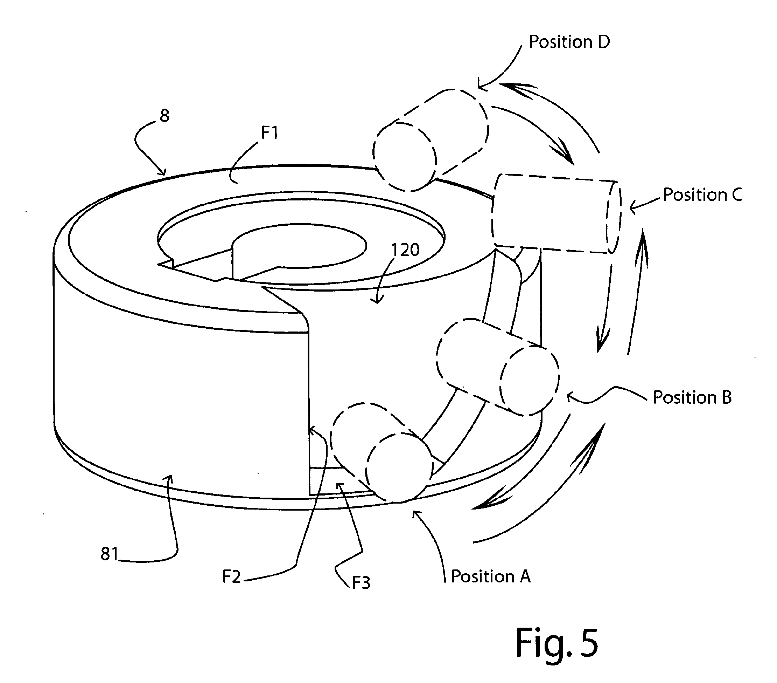

La figure 5 précise les positions relatives du doigt de commande 140 par rapport à la came. Le doigt passe successivement de la position A à la position B puis les positions C, D, puis revient en position A après être passé par les positions C puis B.

On voit donc qu'il est possible de réaliser l'ensemble des opérations en ayant des mouvements précis des différents éléments mobiles. Le coulisseau est ainsi soumis à des efforts élastiques qui le rendent moins sujet à des coincements intempestifs. Les efforts de frottement faibles permettent d'utiliser des matériaux moins chers qui s'usent moins.

L'homme de l'art pourra appliquer ce concept à de nombreux autres systèmes similaires sans sortir du cadre de l'invention défini dans les revendications jointes.

## Revendications

1. Antivol de sécurité comportant un boîtier (1) dans lequel un rotor (2) est monté à rotation entre une position angulaire de repos dans laquelle une clé (3) appropriée peut être introduite, par un orifice d'avant en arrière, ou retirée axialement d'arrière en avant, et au moins une position angulaire d'utilisation, dans laquelle la clé ne peut être extraite du rotor, le rotor comportant à l'opposé de l'orifice d'entrée un organe de sortie rotatif formant came (8) comprenant une face interne (12) sensiblement située dans un plan perpendiculaire à l'axe de rotation du rotor, la dite came étant susceptible de coopérer avec un doigt de commande (140) porté par un coulisseau (100) comprenant un corps longiligne monté coulissant dans le boîtier, selon une direction axiale, entre une position arrière d'antivol vers laquelle il est sollicité par des moyens élastiques (110) et dans laquelle il fait saillie axialement vers l'arrière à travers une ouverture du boîtier pour commander le blocage en rotation d'un organe de la colonne de direction lorsque le rotor est en position de repos, clé extraite, et une position avant escamotée à l'intérieur du boîtier,
ledit dispositif de sécurité comprenant en outre
- un palpeur (4) basculant situé au voisinage de l'entrée du rotor (2), radialement mobile dans le rotor et pouvant passer d'une position relevée à une position repoussée par suite de l'introduction d'une clé (3) dans le rotor (2)
- une lame élastique (130) comprenant une extrémité arrière et une extrémité avant, ladite extrémité arrière de la lame (130) étant solidarisée au corps du coulisseau (100) au moins en translation, l'extrémité avant de cette lame étant mobile radialement par rapport au rotor (2) et étant sollicitée par un moyen élastique vers le centre dudit rotor (2),
ledit coulisseau (100) pouvant être verrouillé, en position avant,
grâce à la coopération du palpeur (4) et de ladite lame (130), le retrait de la clé hors du rotor provoquant le retour du palpeur (4) en position relevée et le désengagement dudit palpeur (4) et de ladite lame (130),
ladite extrémité avant de la lame (130) comprenant une surface perpendiculaire au corps du coulisseau (100) apte à coopérer avec un crochet prévu sur le palpeur (4), de manière à obtenir un verrouillage axial du coulisseau (100).

2. Antivol de sécurité selon la revendication 1, **caractérisé en ce que** la lame est articulée autour d'une charnière solidaire du corps du coulisseau (100), cette charnière ayant pour axe de rotation un axe situé sur le corps et perpendiculaire à l'axe de rotation du rotor.

3. Antivol de sécurité selon la revendication 1 ou 2, **caractérisé en ce que** le moyen élastique tendant à rapprocher l'extrémité avant de la lame radialement vers le centre du rotor est un ressort de compression placé entre le corps du coulisseau (100) et la lame.

4. Antivol de sécurité selon l'une quelconque des revendications précédentes, **caractérisé en ce que** la lame est une lame élastique fixée en sa partie arrière au corps du coulisseau (100).

5. Antivol de sécurité selon l'une quelconque des revendications précédentes, **caractérisé en ce que** la lame élastique a une forme telle au repos qu'elle a naturellement tendance à se placer vers l'intérieur du rotor, de telle sorte que lorsque le rotor est en position stop et que la clé est retirée, le coulisseau soit libre d'être poussé par le moyen élastique vers l'arrière du verrou afin de bloquer la direction, et que lorsque la clé est insérée dans le verrou, le palpeur basculant étant en position sortie, le coulisseau étant entraînée par la pente de la came vers l'avant du verrou, le crochet de la lame élastique du coulisseau vienne contourner le palpeur basculant pour venir se crocheter afin que le coulisseau et donc le pêne soit maintenu en position de sécurité.

6. Antivol de sécurité selon l'une quelconque des revendications précédentes, **caractérisé en ce que** la lame comprend en sa partie arrière un pliage constituant une butée de reprise d'effort, cette partie traversant un premier orifice central du coulisseau.

7. Antivol de sécurité selon l'une quelconque des revendications précédentes, **caractérisé en ce que** la lame comprend en sa partie avant un pliage constituant une butée d'armement limitant le débattement radial de la lame flexible.

8. Antivol de sécurité selon l'une quelconque des revendications précédentes, **caractérisé en ce que** la lame comprend en sa partie avant une zone (Z6) sensiblement perpendiculaire au corps du coulisseau (100) apte à être guidée par l'encoche (102) du corps (100) du coulisseau prévue à cet effet.

9. Antivol de sécurité selon l'une quelconque des revendications précédentes, **caractérisé en ce que** le palpeur est articulé suivant un axe perpendiculaire à l'axe du rotor.

10. Antivol de sécurité selon l'une quelconque des revendications précédentes, **caractérisé en ce que** le doigt de commande est monté tournant autour d'un axe radial afin de diminuer les frottements entre le doigt de commande et la came.

11. Antivol de sécurité selon la revendication 10, **caractérisé en ce que** la came est réalisée en matériaux plastiques éventuellement chargés en fibres à haute résistance.

12. Antivol de sécurité selon l'une quelconque des revendications précédentes, **caractérisé en ce que** la came est réalisée en alliage de Zinc et d'Aluminium.

13. Antivol de sécurité selon l'une quelconque des revendications précédentes, **caractérisé en ce que** le palpeur est réalisée en alliage de Zinc et d'Aluminium ou en matériaux plastiques.

14. Antivol de sécurité selon l'une quelconque des revendications précédentes, **caractérisé en ce que** la lame élastique est réalisée en acier à ressort ou en cuivre béryllium traité thermiquement.

15. Antivol de sécurité selon l'une quelconque des revendications précédentes, **caractérisé en ce que** la lame élastique et le corps du coulisseau pourront être réalisés à partir de la même pièce par découpage et emboutissage.

## Claims

1. Security antitheft device comprising a casing (1) in which a rotor (2) is mounted so as to rotate between an angular rest position in which an appropriate key (3) can be inserted, via an orifice from front to rear, or withdrawn axially from rear to front, and at least one angular position of use, in which the key cannot be extracted from the rotor, the rotor comprising, opposite the entrance orifice, a rotary outlet member forming a cam (8) comprising an inner face (12) substantially situated in a plane perpendicular to the axis of rotation of the rotor, said cam being capable of interacting with a control spigot (140) supported by a slide (100) comprising an elongate body mounted slidingly in the casing, in an axial direction, between a rear antitheft position toward which it is forced by elastic means (110) and in which it protrudes axially rearward through an opening of the casing in order to control the immobilization in rotation of a member of the steering column when the rotor is in the rest position, key extracted, and a front position retracted inside of the casing,
said security device furthermore comprising:
- a tilting sensor (4) situated in the vicinity of the entrance of the rotor (2), the sensor being radially mobile in the rotor and able to move from a raised position to a depressed position following the introduction of a key (3) into the rotor (2); and
- an elastic blade (130) comprising a rear end and a front end, said rear end of the blade (130) being attached, at least in translation, to the body of the slide (100), the front end of this blade being radially mobile relative to the rotor (2) and being forced by an elastic means towards the centre of said rotor (2),
it being possible to lock said slide (100) in the front position by virtue of the interaction between the sensor (4) and said blade (130), the removal of the key from the rotor causing the sensor (4) to return to the raised position and causing said sensor (4) and said blade (130) to disengage,
said front end of the blade (130) comprising a surface lying perpendicular to the body of the slide (100) able to interact with a hook provided on the sensor (4) so as to axially lock the slide (100).

2. Security antitheft device according to Claim 1, **characterized in that** the blade is articulated about a hinge attached to the body of the slide (100), this hinge having as its axis of rotation a spindle situated on the body and perpendicular to the axis of rotation of the rotor.

3. Security antitheft device according to Claim 1 or 2, **characterized in that** the elastic means tending to move the front end of the blade radially closer to the center of the rotor is a compression spring placed between the body of the slide (100) and the blade.

4. Security antitheft device according to any one of the preceding claims, **characterized in that** the blade is an elastic blade fixed at its rear portion to the body of the slide (100).

5. Security antitheft device according to any one of the preceding claims, **characterized in that** the elastic blade has a shape such that, at rest, it naturally tends to place itself toward the inside of the rotor, so that, when the rotor is in the stop position and the key is removed, the slide is free to be pushed by the elastic means toward the rear of the lock in order to immobilize the steering, and that, when the key is inserted in the lock, the tilting sensor being in the outlet position, the slide being driven by the slope of the cam toward the front of the lock, the hook of the elastic blade of the slide moves around the tilting sensor in order to catch so that the slide and hence the latch is held in the security position.

6. Security antitheft device according to any one of the preceding claims, **characterized in that** the blade comprises in its rear portion a fold forming a force-absorbing stop, this portion passing through a first central orifice of the slide.

7. Security antitheft device according to any one of the preceding claims, **characterized in that** the blade comprises in its front portion a fold forming a cocking stop limiting the radial clearance of the flexible blade.

8. Security antitheft device according to any one of the preceding claims, **characterized in that** the blade comprises in its front portion a zone (Z6) that lies substantially perpendicular to the body of the slide (100) able to be guided by the notch (102) in the body of the slide (100), the notch being provided for this purpose.

9. Security antitheft device according to any one of the preceding claims, **characterized in that** the sensor is articulated on an axis perpendicular to the axis of the rotor.

10. Security antitheft device according to any one of the preceding claims, **characterized in that** the control spigot is mounted so as to rotate about a radial spindle in order to reduce the friction between the control spigot and the cam.

11. Security antitheft device according to Claim 10, **characterized in that** the cam is made of plastic materials optionally laden with high-strength fibers.

12. Security antitheft device according to any one of the preceding claims, **characterized in that** the cam is made of a zinc and aluminum alloy.

13. Security antitheft device according to any one of the preceding claims, **characterized in that** the sensor is made of a zinc and aluminum alloy or of plastic materials.

14. Security antitheft device according to any one of the preceding claims, **characterized in that** the elastic blade is made of spring steel or of heat-treated beryllium copper.

15. Security antitheft device according to any one of the preceding claims, **characterized in that** the elastic blade and the body of the slide can be made from the same part by cutting and swaging.

## Patentansprüche

1. Sicherheits-Diebstahlsicherung, die ein Gehäuse (1) aufweist, in dem ein Rotor (2) zwischen einer Ruhewinkelstellung, in der ein geeigneter Schlüssel (3) durch eine Öffnung axial von vorne nach hinten eingeführt oder von hinten nach vorne herausgezogen werden kann, und mindestens einer Nutzungswinkelstellung drehbar montiert ist, in der der Schlüssel nicht aus dem Rotor herausgezogen werden kann, wobei der Rotor entgegengesetzt zur Eingangsöffnung ein eine Nocke (8) bildendes drehendes Ausgangsorgan aufweist, das eine Innenseite (12) enthält, die sich im Wesentlichen in einer Ebene lotrecht zur Drehachse des Rotors befindet, wobei die Nocke mit einem Steuerfinger (140) zusammenwirken kann, der von einem Schieber (100) getragen wird, der einen langlinigen Körper enthält, der in das Gehäuse gemäß einer axialen Richtung zwischen einer hinteren Diebstahlsicherungsstellung, in die er von elastischen Einrichtungen (110) gezogen wird und in der er axial nach hinten durch eine Öffnung des Gehäuses vorsteht, um die Drehsperre eines Organs der Lenksäule zu steuern, wenn der Rotor in der Ruhestellung mit herausgezogenem Schlüssel ist, und einer vorderen, ins Innere des Gehäuses eingezogenen Stellung gleitend montiert ist,
wobei die Sicherheitsvorrichtung außerdem enthält
- einen Kipptaster (4), der sich in der Nähe des Eingangs des Rotors (2) befindet, radial im Rotor beweglich ist und nach dem Einführen eines Schlüssels (3) in den Rotor (2) von einer angehobenen Stellung in eine zurückgedrückte Stellung übergehen kann,
- eine elastische Lamelle (130), die ein hinteres Ende und ein vorderes Ende enthält, wobei das hintere Ende der Lamelle (130) zumindest in Translationsrichtung fest mit dem Körper des Schiebers (100) verbunden ist, wobei das vordere Ende dieser Lamelle bezüglich des Rotors (2) radial beweglich ist und von einer elastischen Einrichtung zur Mitte des Rotors (2) beaufschlagt wird,
wobei der Schieber (100) in der vorderen Stellung aufgrund der Zusammenwirkung des Tasters (4) und der Lamelle (130) verriegelt werden kann, wobei das Herausziehen des Schlüssels aus dem Rotor die Rückkehr des Tasters (4) in die angehobene Stellung und das Entkoppeln des Tasters (4) und der Lamelle (130) bewirkt,
wobei das vordere Ende der Lamelle (130) eine Fläche lotrecht zum Körper des Schiebers (100) enthält, die mit einem auf dem Taster (4) vorgesehenen Haken zusammenwirken kann, um eine axiale Verriegelung des Schiebers (100) zu erhalten.

2. Sicherheits-Diebstahlsicherung nach Anspruch 1, **dadurch gekennzeichnet, dass** die Lamelle um ein fest mit dem Körper des Schiebers (100) verbundenes Scharnier angelenkt ist, wobei dieses Scharnier als Drehachse eine Achse hat, die sich auf dem Körper befindet und zur Drehachse des Rotors lotrecht ist.

3. Sicherheits-Diebstahlsicherung nach Anspruch 1 oder 2, **dadurch gekennzeichnet, dass** die elastische Einrichtung, die die Tendenz hat, das vordere Ende der Lamelle radial der Mitte des Rotors anzunähern, eine Druckfeder ist, die zwischen dem Körper des Schiebers (100) und der Lamelle angeordnet ist.

4. Sicherheits-Diebstahlsicherung nach einem der vorhergehenden Ansprüche, **dadurch gekennzeichnet, dass** die Lamelle eine elastische Lamelle ist, die in ihrem hinteren Bereich am Körper des Schiebers (100) befestigt ist.

5. Sicherheits-Diebstahlsicherung nach einem der vorhergehenden Ansprüche, **dadurch gekennzeichnet, dass** die elastische Lamelle in der Ruhestellung eine solche Form hat, dass sie naturgemäß die Tendenz hat, sich zum Inneren des Rotors anzuordnen, so dass, wenn der Rotor in der Haltestellung und der Schlüssel herausgezogen ist, der Schieber frei ist, um durch die elastische Einrichtung zur Rückseite des Schlosses gedrückt zu werden, um die Lenkung zu blockieren, und dass, wenn der Schlüssel in das Schloss eingeführt wird, wobei der Kipptaster in der ausgetretenen Stellung ist, wobei der Schieber durch die Neigung der Nocke zur Vorderseite des Schlosses gezogen wird, der Haken der elastischen Lamelle des Schiebers den Kipptaster umgeht, um sich einzuhaken, damit der Schieber und somit die Schlossfalle in der Sicherheitsstellung gehalten wird.

6. Sicherheits-Diebstahlsicherung nach einem der vorhergehenden Ansprüche, **dadurch gekennzeichnet, dass** die Lamelle in ihrem hinteren Bereich eine Umbiegung enthält, die einen Lastaufnahmeanschlag bildet, wobei dieser Bereich eine erste Mittelöffnung des Schiebers durchquert.

7. Sicherheits-Diebstahlsicherung nach einem der vorhergehenden Ansprüche, **dadurch gekennzeichnet, dass** die Lamelle in ihrem vorderen Bereich eine Umbiegung enthält, die einen Spannanschlag bildet, der den radialen Ausschlag der flexiblen Lamelle begrenzt.

8. Sicherheits-Diebstahlsicherung nach einem der vorhergehenden Ansprüche, **dadurch gekennzeichnet, dass** die Lamelle in ihrem vorderen Bereich eine Zone (Z6) im Wesentlichen lotrecht zum Körper des Schiebers (100) enthält, die von der Kerbe (102) des Körpers des Schiebers (100) geführt werden kann, die zu diesem Zweck vorgesehen ist.

9. Sicherheits-Diebstahlsicherung nach einem der vorhergehenden Ansprüche, **dadurch gekennzeichnet, dass** der Taster gemäß einer Achse lotrecht zur Achse des Rotors angelenkt ist.

10. Sicherheits-Diebstahlsicherung nach einem der vorhergehenden Ansprüche, **dadurch gekennzeichnet, dass** der Steuerfinger um eine radiale Achse drehend montiert ist, um die Reibungen zwischen dem Steuerfinger und der Nocke zu verringern.

11. Sicherheits-Diebstahlsicherung nach Anspruch 10, **dadurch gekennzeichnet, dass** die Nocke aus Kunststoffen hergestellt ist, die ggf. mit hochfesten Fasern angereichert sind.

12. Sicherheits-Diebstahlsicherung nach einem der vorhergehenden Ansprüche, **dadurch gekennzeichnet, dass** die Nocke aus einer Zink-Aluminium-Legierung hergestellt ist.

13. Sicherheits-Diebstahlsicherung nach einem der vorhergehenden Ansprüche, **dadurch gekennzeichnet, dass** der Taster aus einer Zink-Aluminium-Legierung oder aus Kunststoffen hergestellt ist.

14. Sicherheits-Diebstahlsicherung nach einem der vorhergehenden Ansprüche, **dadurch gekennzeichnet, dass** die elastische Lamelle aus Federstahl oder aus wärmebehandeltem Kupferberyllium hergestellt ist.

15. Sicherheits-Diebstahlsicherung nach einem der vorhergehenden Ansprüche, **dadurch gekennzeichnet, dass** die elastische Lamelle und der Körper des Schiebers durch Schneiden und Tiefziehen aus dem gleichen Stück hergestellt werden können.
